(19) Europäisches Patentamt
European Patent Office
Office européen des brevets

(11) EP 4 517 865 A1

(12) EUROPEAN PATENT APPLICATION

(43) Date of publication:
05.03.2025 Bulletin 2025/10

(21) Application number: 24195221.7

(22) Date of filing: 19.08.2024

(51) International Patent Classification (IPC):
*H01M 4/134* (2010.01) *H01M 4/1395* (2010.01)
*H01M 4/38* (2006.01) *H01M 4/62* (2006.01)

(52) Cooperative Patent Classification (CPC):
H01M 4/386; H01M 4/134; H01M 4/1395;
H01M 4/625

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 25.08.2023 KR 20230112176

(71) Applicant: SAMSUNG SDI CO., LTD.
Giheung-gu
Yongin-si, Gyeonggi-do
17084 (KR)

(72) Inventors:
- KIM, Narae
Yongin-si, Gyeonggi-do 17084 (KR)
- KIM, Deok-Hyun
Yongin-si, Gyeonggi-do 17084 (KR)
- KIM, Youngugk
Yongin-si, Gyeonggi-do 17084 (KR)
- KANG, Eunji
Yongin-si, Gyeonggi-do 17084 (KR)
- KIM, Jaewon
Yongin-si, Gyeonggi-do 17084 (KR)
- CHOI, Ilyoung
Yongin-si, Gyeonggi-do 17084 (KR)
- KIM, Hyejin
Yongin-si, Gyeonggi-do 17084 (KR)
- KIM, Yookyung
Yongin-si, Gyeonggi-do 17084 (KR)
- LEE, Banseok
Yongin-si, Gyeonggi-do 17084 (KR)

(74) Representative: Marks & Clerk LLP
15 Fetter Lane
London EC4A 1BW (GB)

# (54) NEGATIVE ELECTRODE ACTIVE MATERIAL AND RECHARGEABLE LITHIUM BATTERY INCLUDING SAME

(57) A negative electrode active material, including silicon nanoparticles including an amorphous carbon coating layer on a surface of the silicon nanoparticles; and pores, wherein the negative electrode active material has a sphericity as represented by Equation 1 of about 0.9 to about 1.0, and the pores include mesopores, and a ratio of a mesopores volume relative to a total pore volume of the negative electrode active material is about 30% or more and less than about 70%, and

[Equation 1]

$$\text{Sphericity (S)} = 4\pi \times A/B^2$$

in Equation 1, A is an area of the negative electrode active material and B is a circumference of a shape of the negative electrode active material.

FIG. 1

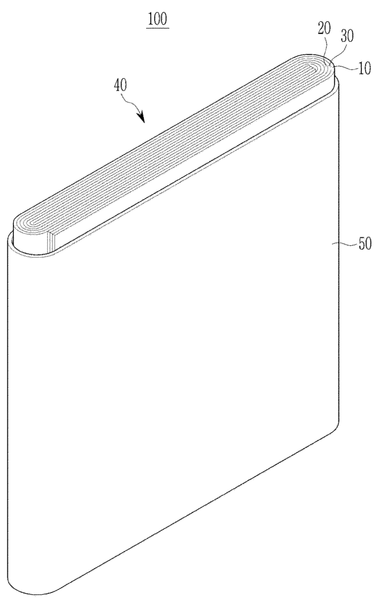

## Description

### BACKGROUND

#### 1. Field

Embodiments relate to a negative electrode active material and a rechargeable lithium battery including the same.

#### 2. Description of the Related Art

Recently, the rapid increase of electronic devices such as mobile phones, laptop computers, and electric vehicles using batteries has resulted in a surprising increase in demand for rechargeable batteries with relatively high capacity and lighter weight. The development of batteries with a high energy density has been required, which further requires a high-capacity negative electrode active material. It has been attempted to use a Si negative electrode active material as the high-capacity negative electrode active material.

### SUMMARY

Embodiments are directed to a negative electrode active material, including silicon nanoparticles including an amorphous carbon coating layer on a surface of the silicon nanoparticles; and pores, wherein the negative electrode active material has a sphericity as represented by Equation 1 of about 0.9 to about 1.0, and the pores include mesopores, and a ratio of a mesopores volume relative to a total pore volume of the negative electrode active material is about 30% or more and less than about 70%, and

[Equation 1]

$$\text{Sphericity (S)} = 4\pi \times A/B^2$$

in Equation 1, A is an area of the negative electrode active material and B is a circumference of a shape of the negative electrode active material.

The mesopores may have a size of about 2 nm to about 50 nm.

The ratio of mesopore volume relative to a total pore volume of the negative electrode active material may be about 30% to about 68%.

The negative electrode active material may have a span as defined by Equation 2 of about 1.1 to about 1.6, and

[Equation 2]

$$\text{Span} = (D90-D10)/D50$$

in Equation 2, D10 refers to a diameter of the negative electrode active material particles with a cumulative volume of 10 volume% in a particle size distribution, D50 refers to a diameter of the negative electrode active material particles with a cumulative volume of 50 volume% in the particle size distribution, and D90 refers to a diameter of the negative electrode active material particles with a cumulative volume of 90 volume% in the particle size distribution.

The span of the negative electrode active material may be about 1.1 to about 1.55.

The span of the negative electrode active material may be about 1.1 to about 1.5.

The sphericity of the negative electrode active material may be about 0.92 to about 0.98.

The sphericity of the negative electrode active material may be about 0.92 to about 0.95.

The negative electrode active material may further include a polymer layer on the amorphous carbon coating layer.

The polymer layer may include polyvinyl alcohol and polyacrylic acid.

The polymer layer may include a copolymer of polyvinyl alcohol and polyacrylic acid.

The copolymer may include a cross-linked copolymer in which the polyvinyl alcohol and the polyacrylic acid are cross-linked.

The negative electrode active material may have a specific surface area (BET) of about 0.5 $m^2/g$ to about 2 $m^2/g$.

The negative electrode active material may have a specific surface area (BET) of about 0.8 $m^2/g$ to about 2 $m^2/g$.

The negative electrode active material may have a specific surface area (BET) of about 0.8 $m^2/g$ to about 1.5 $m^2/g$.

The total pore volume of the negative electrode active material may be about 0.001 $cm^3/g$ to about 0.05 $cm^3/g$.

The silicon nanoparticles may have a particle diameter of about 10 nm to about 1,000 nm.

The amorphous carbon coating layer may have a thickness of about 1 nm to about 2 $\mu$m.

The embodiments may be realized by providing a rechargeable lithium battery, including a negative electrode including the negative electrode active material; a positive electrode; and an electrolyte.

The negative electrode may include the negative electrode active material as a first negative electrode active material and further includes crystalline carbon as a second negative electrode active material.

At least some of the above and other features of the invention are set out in the claims.

## BRIEF DESCRIPTION OF THE DRAWING

Features will become apparent to those of skill in the art by describing in detail embodiments with reference to the attached drawing in which:

FIG. 1 is an exploded perspective view of a rechargeable lithium battery according to an embodiment.

## DETAILED DESCRIPTION

Example embodiments will now be described more fully hereinafter with reference to the accompanying drawing; however, they may be embodied in different forms and should not be construed as limited to the embodiments set forth herein. Rather, these embodiments are provided so that this disclosure will be thorough and complete, and will fully convey implementations to those skilled in the art.

In the drawing figure, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout. Expressions in the singular include expressions in plural unless the context clearly dictates otherwise.

The term "combination thereof' may include a mixture, a laminate, a complex, a copolymer, an alloy, a blend, a reactant of constituents.

The terms "comprise", "include" or "have" are intended to designate that the performed characteristics, numbers, steps, constituted elements, or a combination thereof is present, but it should be understood that the possibility of presence or addition of one or more other characteristics, numbers, steps, constituted elements, or a combination are not to be precluded in advance. When an element is referred to as being "directly on" another element, there are no intervening elements present.

In some embodiments, herein, "layer" includes a shape totally formed on the entire surface or a shape partial surface, when viewed from a plane view

As used herein, "or" is not to be construed in an exclusive sense, for example, "A or B" may be interpreted to include A, B, A+B, or the like.

In the present disclosure, when a definition is not otherwise provided, a particle diameter or size may indicate an average particle diameter. The average particle diameter indicates an average value of the diameter of the particles depending on a cumulative volume in the particle size distribution of particles included in the negative electrode active material. The average particle size (D50) may be measured by a suitable method, e.g., by a particle size analyzer, or by a transmission electron microscopic image, or a scanning electron microscopic image. In some embodiments, a dynamic light-scattering measurement device may be used to perform a data analysis, and the number of particles may be counted for each particle size range, and from this, the average particle diameter (D50) value may be easily obtained through a calculation.

A negative electrode active material according to some embodiments includes pores, and silicon nanoparticles having an amorphous carbon coating layer on a surface of the silicon nanoparticles. The negative electrode active material has a sphericity (S) as represented by Equation 1 of about 0.9 to about 1.0.

[Equation 1]

$$\text{Sphericity (S)} = 4\pi \times A/B^2$$

Wherein in Equation 1, A is an area of the negative electrode active material and B is a circumference of a shape of the negative electrode active material.

The pores include mesopores and the ratio of the mesopores volume relative to the total pore volume of the negative electrode active material is about 30% or more and less than about 70%.

In an implementation, the ratio of the mesopores volume may be defined by (mesopore volume/ total pore volume)* 100%, and may be, e.g., about 30% or more and less than about 70%, or may be about 30% to about 68%.

In an implementation, the total pore volume and the mesopore volume may be quantitatively measured by, e.g., BJH(Barrett-Joyner-Halenda) analysis equipment. For example, the pore volume value per pore width (e.g., diameter) may be plotted via BJH analysis, and the volume of the pore width (e.g., diameter) of about 2 nm to about 50 nm are summed to obtain the volume of the mesopores.

In an implementation, the total pore volume may represent, e.g., a total volume of total pores in the negative electrode active material of any size, including mesopores volume. In an implementation, the total pore volume may be, e.g., about 0.001 $cm^3$/g to about 0.05 $cm^3$/g, or about 0.005 $cm^3$/g to about 0.05 $cm^3$/g, and may be a value measured by BJH.

A mesopore may refer to a pore with a size of, e.g., about 2 nm to about 50 nm. In an implementation, the pores may include macropores with a size of greater than about 50 nm. The pores with a size exceeding about 50 nm may be classified as a macropore, so that there may be no need to limit the maximum value of the macropores, but it may be up to about 500 nm. It may be desirable that these macropores are included in an amount of about 1 volume% or less based on the total pore volume and at least 0 volume%, e.g., the macropores may be not substantially included in the negative electrode active material.

The pores may also include micropores with a size of, e.g., more than about 0 nm and less than about 2 nm. The volume of micropores included in the negative electrode active material may correspond to a volume excluding the mesopore volume from the total pore volume, or excluding the mesopore volume and the macropore volume from the total pore volume, if the pores include macropores. The pore size may represent a diameter of the pores or a length of the longest axis of the pores.

In an implementation, the mesopores, the micropores, and the macropores may be classified according to the size of the pores.

The negative electrode active material according to one or more embodiments may have a spherical shape, which may help it be well distributed throughout the negative electrode, thereby helping reduce expansion during charging and discharging. In an implementation, the negative electrode active material may be used by mixing it with crystalline carbon, and thereby the spherical negative electrode active material may be better inserted between the crystalline carbon, thereby more evenly distributing throughout the negative electrode.

The negative electrode active material according to one or more embodiments has a sphericity (S) as represented by Equation 1 of about 0.9 to 1.0, indicating a spherical shape.

[Equation 1]

$$\text{Sphericity (S)} = 4\pi \times A/B^2$$

In Equation 1, A is an area of the negative electrode active material and B is a circumference of a shape of the negative electrode active material. In an implementation, B may be, e.g., a circumference of an actual shape of the negative electrode active material shape.

In an implementation, the sphericity of the negative electrode active material may be the value obtained by projecting a three-dimensional particle onto a two-dimensional plane. In an implementation, the sphericity may be a ratio of a boundary of the actual particle shape and a boundary of a circle having the same area as the actual particle shape.

The area, A, may refer to the area of the circle with the same circumference as B, which may be determined after obtaining a SEM image of the electrode cross-section using, e.g., a CP-SEM (controlled pressure scanning electron microscope) and obtaining the actual circumference length (B) of the particle, e.g., via the ImageJ program. In an implementation, the length of the actual circumference may not be only the circumference if the particle shape is a perfect sphere, but may also be the length obtained along the circumference, if the particle shape is not a perfect sphere and has bumpy regions.

The sphericity of the negative electrode active material according to one or more embodiments may be, e.g.,

about 0.92 to about 0.98, or about 0.92 to about 0.95. Maintaining the sphericity of the negative electrode active material within the above ranges, may help ensure that the expansion may be further effectively suppressed during charging and discharging.

The negative electrode active material according to one or more embodiments may have span as defined by Equation 2 of about 1.1 to about 1.6.

[Equation 2]

$$\text{Span} = (D90 - D10)/D50$$

In Equation 2, D10 may refer to, e.g., a diameter of the negative electrode active material particles with a cumulative volume of 10 volume% in a particle size distribution, D50 may refer to, e.g., a diameter of the negative electrode active material particles with a cumulative volume of 50 volume% in the particle size distribution, and D90 may refer to, e.g., a diameter of the negative electrode active material particles with a cumulative volume of 90 volume% in the particle size distribution.

In one or more embodiments, the span may be, e.g., about 1.1 to about 1.55, or about 1.1 to about 1.5.

Maintaining the span of the negative electrode active material within the above range may help ensure that the negative electrode active material does not substantially include any fine powders. In an implementation, the fine powders with a size of, e.g., about 1 μm or less and irregular shape may rarely be included, so that low specific surface area may be exhibited, thereby reducing side reactions with the electrolyte and improving cycle-life.

The negative electrode active material according to one or more embodiments may have low specific surface area, e.g., low BETspecific surface area, and the specific surface area thereof may be, e.g., about 0.5 $m^2/g$ to about 2 $m^2/g$, about 0.8 $m^2/g$ to about 2 $m^2/g$, or about 0.8 $m^2/g$ to about 1.5 $m^2/g$. This specific surface area may be lower than the specific surface area of the silicon-carbon composite negative electrode active material of, e.g., approximately 3 $m^2/g$. In one or more embodiments, the BET specific surface area may be measured using ASAP2020.

In one or more embodiments, a particle diameter of the silicon nanoparticle may be, e.g., about 10 nm to about 1,000 nm, and according to another implementation, may be, e.g., about 10 nm to about 200 nm, or about 20 nm to 150 nm. Maintaining the average particle diameter of the silicon nanoparticles within the range, may help ensure that the extreme volume expansion caused during charge and discharge may be suppressed, and a breakage of the conductive path due to crushing of particle may be prevented.

In an implementation, in the amorphous carbon coating layer, amorphous carbon may be, e.g., soft carbon, hard carbon, mesophase pitch carbide, sintered coke, or a combination thereof. A thickness of the amorphous carbon coating layer may be, e.g., about 1 nm to about 2 μm, about 1 nm to about 500 nm, about 10 nm to about 300 nm, or about 20 nm to about 200 nm. Maintaining the thickness of the amorphous carbon coating layer within the above range, may help ensure that the silicon volume expansion may be effectively suppressed during charging and discharging. In one or more embodiments, the thickness of the amorphous carbon coating layer may be measured by a SEM image or a TEM image of the cross-section of the silicon-carbon composite, but as it may be limited, it may be measured by any techniques as long as the thickness of the amorphous carbon coating layer is measured.

In the negative electrode active material, an amount of the silicon nanoparticle may be, based on a total weight of the negative electrode active material, e.g., about 55 wt% to about 64 wt%, or about 58 wt% to about 62 wt%. An amount of the amorphous carbon coating layer may be, e.g., based on the total weight of the negative electrode active material, about 36 wt% to about 45 wt%, or about 38 wt% to about 42 wt%.

In an implementation, the negative electrode active material according to one or more embodiments may further include a polymer layer on the amorphous carbon coating layer. The polymer layer may include, e.g., a copolymer of polyvinyl alcohol and polyacrylic acid, and this copolymer may be a cross-linked copolymer in which polyvinyl alcohol and polyacrylic acid are cross-linked. Including the polymer layer in the negative electrode active material layer may help ensure that the volume expansion of the negative electrode active material may be effectively suppressed during charging and discharging.

The polymer layer may include, e.g., polyvinyl alcohol and polyacrylic acid, which may help ensure that the impregnation of the electrolyte into the inside of the negative electrode active material during charging and discharging, e.g., into the empty space or pores of the negative electrode active material may be prevented, thereby further effectively suppressing the side reaction of the negative electrode active material with the electrolyte. Polyvinyl alcohol and polyacrylic acid may each be an aqueous polymer and an environmentally-friendly polymer.

In an implementation, the polymer layer may include a copolymer of polyvinyl alcohol and polyacrylic acid, and, e.g., may be a cross-linked polymer, e.g., a cross-linked copolymer in which polyvinyl alcohol and polyacrylic acid are cross-linked. In an implementation, the polymer of the polymer layer may be a cross-linked polymer of polyvinyl alcohol

and polyacrylic acid. Including a cross-linked polymer of polyvinyl alcohol and polyacrylic acid in the polymer layer as the cross-linked polymer, may ensure that the polymer layer may not be dissolved in a solvent used for preparing a negative electrode active material layer, e.g., water and thus, the polymer layer may be maintained.

In the negative electrode active material according to some embodiments, if the silicon nanoparticles and the amorphous carbon coating layer are referred as a silicon-carbon composite, an amount of the polymer layer may be, based on 100 parts by weight of the silicon-carbon composite, about 0.01 parts by weight to about 3 parts by weight, or about 1.2 parts by weight to about 2.1 parts by weight. Maintaining the amount of the polymer layer included in the above range, may help ensure that the effect from the polymer layer may be more largely obtained.

In the polymer layer, a weight ratio of polyvinyl alcohol and polyacrylic acid may be, e.g., about 3:97 to about 40:60, about 6:94 to about 40:60, or about 6:94 to about 20:80. Maintaining the mixing ratio of polyvinyl alcohol and polyacrylic acid within the above range and, e.g., maintaining the amount of polyacrylic acid higher than that of polyvinyl alcohol, may help ensure the cycle-life characteristic may be further enhanced.

In an implementation, a ratio of the functional groups included in polyvinyl alcohol and polyacrylic acid included in the polymer layer may be appropriately adjusted. In an implementation, a mole ratio of the OH group included in polyvinyl alcohol and a COOH group included in polyacrylic acid may be, e.g., about 5:95 to about 50:50, or about 10:90 to about 30:70. Maintaining the mole ratio of the functional groups within the above range may help ensure the effect by preparing the polymer layer may be further enhanced and the cycle-life characteristic may be further improved.

The negative electrode active material according to some embodiments may be prepared by the following procedures.

Micrometer sized silicon particles may be pulverized to prepare nano-sized silicon primary particles. The pulverization may be carried out by a suitable technique such as a ball milling. The pulverization may be performed, e.g., by using a dispersant. The dispersant may include, e.g., stearic acid, boron nitride (BN), MgS, polyvinyl pyrrolidone (PVP), or a combination thereof. The used amount of the dispersant may be an appropriate amount for milling of the silicon particles.

A particle diameter of the silicon primary particle may be, e.g., about 1 nm to about 1000 nm, about 10 nm to about 1000 nm, about 10 nm to about 200 nm, or about 20 nm to about 150 nm.

The resulting mixture may be dried. The drying process may be carried out by, e.g., a spray drying. A drying process carried out by a spray drying, may result in a dried product with a more uniform particle diameter and a spherical shape, from which secondary particles where primary particles are agglomerated, may be prepared. Maintaining the uniform particle diameter and spherical shape of the dried product may help ensure that the amorphous carbon layer may be more uniformly formed on the entire surface.

The dried product may be mixed with an amorphous carbon precursor. The amorphous carbon precursor may be petroleum coke, coal coke, petroleum pitch, coal pitch, green cokes, or a combination thereof.

The resulting product may be further subjected to a compression molding. This compression molding may reduce the pores inside the negative electrode active material, thereby effectively suppressing side reaction.

The compression molding may be carried out at a pressure sufficient to maintain the spherical shape of a final product, negative electrode active material, e.g., greater than about 0 Mpa and about 30 Mpa or less, greater than about 0 Mpa and about 20 Mpa or less, or about 5 MPa to about 20 MPa.

The compression molding may be carried out by, e.g., the Cold Isostatic Pressing (CIP). Performing the compression molding in the above pressure range may help ensure that the pores may be appropriately reduced without generating fine powders, while maintaining the spherical shape.

Thereafter, the compression molded product may be carbonized. The carbonization may be performed, e.g., at about 600 °C to about 1,000 °C. In the carbonization, the dispersant may be removed. The carbonization may be carried out under, e.g., an $N_2$ atmosphere, a helium atmosphere, or a combination thereof. As a result of the carbonization, the amorphous carbon precursor may be converted to amorphous carbon, which may be surround the surface of the compression molded product, thereby preparing an amorphous carbon coating layer.

Performing the carbonization at the above temperature range may help ensure that the excessive growth of Si particles may be suppressed, that the formation of SiC may be suppressed, and that the electrical conductivity of amorphous carbon may be simultaneously enhanced. In an implementation, amorphous carbon may be inserted into pores formed between primary particles to be positioned on the surface of the primary particles, thereby surrounding the surface of the primary particles. Performing the carbonization under the atmospheres indicated above may help ensure that amorphous carbon may be effectively prepared, while effectively suppressing the oxidation of silicon and formation of SiC, thereby reducing the resistance of the active material.

In an implementation, instead of mixing the dried product with the amorphous carbon precursor, a vapor coating may be carried out on the dried product using an amorphous carbon precursor gas. This may allow to form the amorphous carbon coating layer on the surface of the product without the additional carbonization process. Thus, after performing the vapor coating, a compression may be performed. The compression conditions may be as described above.

If the negative electrode active material layer further includes a polymer layer, the prepared negative electrode

active material (which hereinafter may be referred to as a silicon-carbon composite) may be further mixed with a polymer solution and dried, followed by heat-treating.

The polymer solution may be prepared by mixing polyvinyl alcohol with polyacrylic acid in a solvent, and the solvent may be, e.g., water, ethanol, or a combination thereof.

The mixing ratio of the silicon-carbon composite and the polymer solution may be appropriately adjusted in order to have an amount of the polymer and a mixing ratio of polyvinyl alcohol and polyacrylic acid in the prepared negative electrode active material.

The heat-treatment may cause the condensation reaction of the OH group of polyvinyl alcohol and the COOH group of polyacrylic acid to cross-link polyvinyl alcohol with polyacrylic acid, thereby preparing a cross-linked polymer.

The heat-treatment may be carried at, e.g., about 150 °C to about 200 °C. Performing the heat-treatment in the above range of the temperature may help ensure that the condensation reaction, e.g., the cross-linking reaction may be well occurred, thereby effectively preparing a cross-linked polymer.

Thereafter, the heat-treated product may be subjected to pulverization. The pulverization may be carried out by, e.g., using a sieve in order to have a span (defined by Equation 2) of the negative electrode active material to be, e.g., about 1.1 to about 1.6. In an implementation, the pulverization may be performed to obtain an active material having a particle size such that the span obtained from D10, D50, and D90 of the active material is, e.g., about 1.1 to about 1.6.

Another embodiment provides a rechargeable lithium battery including a negative electrode, a positive electrode, and an electrolyte.

The negative electrode may include a current collector, and a negative electrode active material layer on the current collector and including the negative electrode active material according to one or more embodiments.

The negative electrode active material according to some embodiments may be included as a first negative electrode active material and e.g., crystalline carbon, may be included as a second negative electrode active material. A mixing ratio of the first negative electrode active material and the second negative electrode active material may be a weight ratio of about 80:20 to about 90:10. In an implementation, the negative electrode active material may include the first negative electrode active material and the second negative electrode active material at a weight ratio of about 85:15 to about 90:10.

In the negative electrode active material layer, an amount of the negative electrode active material may be about 95 wt% to about 98 wt%, based on the total 100 wt% of the negative electrode active material layer.

In an implementation, the negative electrode active material layer may include a binder, and may further include a conductive material. The amount of the binder may be, e.g., about 1 wt% to about 5 wt%, based on the total weight of the negative electrode active material layer. The amount of the conductive material may be, e.g., about 1 wt% to about 5 wt%, based on the total weight of the negative electrode active material layer.

The binder may help improve binding properties of negative electrode active material particles with one another and with a current collector. The binder may be a non-aqueous binder, an aqueous binder, or a combination thereof.

The non-aqueous binder may include, e.g., an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamide imide, polyimide, or a combination thereof.

The aqueous binder may include, e.g., a styrene-butadiene rubber (SBR), an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, polyester resin, an acrylic resin, a phenolic resin, an epoxy resin, polyvinyl alcohol, or a combination thereof.

In an implementation, the aqueous binder may be used as a negative electrode binder, and a cellulose compound may be further included to help provide viscosity as a thickener. The cellulose compound may include, e.g., carboxymethyl cellulose, hydroxypropylmethyl cellulose, methyl cellulose, or alkali metal salts thereof. The alkali metal may be, e.g., Na, K, or Li. The thickener may be included in an amount of about 0.1 parts by weight to about 3 parts by weight based on 100 parts by weight of the negative electrode active material.

The conductive material may provide electrode conductivity, and a suitable electrically conductive material may be used as a conductive material unless it causes a chemical change. Examples of the conductive material may be a carbon material, e.g., natural graphite, artificial graphite, carbon black, acetylene black, ketjen black, a carbon fiber, and the like; a metal material of a metal powder or a metal fiber including copper, nickel, aluminium, silver, and the like; a conductive polymer such as a polyphenylene derivative; or a mixture thereof.

The current collector may include, e.g., a copper foil, a nickel foil, a stainless steel foil, a titanium foil, a nickel foam, a copper foam, a polymer substrate coated with a conductive metal, and a combination thereof.

The positive electrode may include a current collector and a positive electrode active material layer formed on the current collector.

The positive electrode active material may include lithiated intercalation compounds that reversibly intercalate and deintercalate lithium ions. In an implementation, one or more composite oxides of a metal, e.g., cobalt, manganese,

nickel, or a combination thereof, and lithium, may be used. In an implementation, the compounds represented by one of the following chemical formulae may be used. $Li_aA_{1-b}X_bD^1_2$ (0.90≤a≤1.8, 0≤b≤0.5);

$Li_aA_{1-b}X_bO_{2-c1}D^1_{c1}$ (0.90≤a≤1.8, 0≤b≤0.5, 0≤c1≤0.05); $Li_aE_{1-b}X_bO_{2-c1}D^1_{c1}$ (0.90≤a≤1.8,

0≤b≤0.5, 0≤c1≤0.05); $Li_aE_{2-b}X_bO_{4-c1}D^1_{c1}$ (0.90≤a ≤1.8, 0≤b≤0.5, 0≤c1≤0.05); $Li_aNi_{1-b-c}Co_bX_cD^1_\alpha$ (0.90≤a≤1.8, 0≤b≤0.5, 0≤c≤0.5, 0<α≤2); $Li_aNi_{1-b-c}Co_bX_cO_{2-\alpha}T_\alpha$ (0.90≤a≤1.8,

0≤b≤0.5, 0≤c≤0.5, 0<α<2); $Li_aNi_{1-b-c}Co_bX_cO_{2-a}T_2$ (0.90≤a≤1.8, 0≤b≤0.5, 0≤c≤0.5,

0<α<2); $Li_aNi_{1-b-c}Mn_bX_cD^1_\alpha$ (0.90≤a≤1.8, 0≤b≤0.5, 0≤c≤0.5, 0<α≤2); $Li_aNi_{1-b-c}Mn_bX_cO_{2-\alpha}T_\alpha$ (0.90≤a≤1.8, 0≤b≤0.5, 0≤c≤0.5, 0<α<2); $Li_aNi_{1-b-c}Mn_bX_cO_{2-a}T_2$ (0.90≤a≤1.8,

0≤b≤0.5, 0≤c≤0.5, 0<α<2); $Li_aNi_bE_cG_dO_2$ (0.90≤a≤1.8, 0≤b≤0.9, 0≤c≤0.5,

0.001≤d≤0.1); $Li_aNi_bCo_cL^1_dG_eO_2$ (0.90≤a≤1.8, 0≤b≤0.9, 0≤c≤0.5, 0≤d≤0.5, 0≤e≤0.1);

$Li_aNiG_bO_2$ (0.90≤a≤1.8, 0.001≤b≤0.1); $Li_aCoG_bO_2$ (0.90≤a≤1.8, 0.001≤b≤0.1); $Li_aMn_{1-b}G_bO_2$ (0.90≤a≤1.8, 0.001≤b≤0.1); $Li_aMn_2G_bO_4$ (0.90≤a≤1.8, 0.001≤b≤0.1); $Li_aMn_{1-g}G_gPO_4$ (0.90≤a≤1.8, 0≤g≤0.5); $QO_2$; $QS_2$; $LiQS_2$; $V_2O_5$; $LiV_2O_5$; $LiZO_2$; $LiNiVO_4$; $Li_{(3-f)}J_2(PO_4)_3$ (0≤f≤2); $Li_{(3-f)}Fe_2(PO_4)_3$ (0≤f≤2); $Li_aFePO_4$ (0.90≤a≤1.8)

In the above chemical formulas, A may be Ni, Co, Mn, or combinations thereof; X may be Al, Ni, Co, Mn, Cr, Fe, Mg, Sr, V, a rare earth element, and combinations thereof; $D^1$ may be O, F, S, P, or combinations thereof; E may be Co, Mn, or combinations thereof; T may be F, S, P, or combinations thereof; G may be Al, Cr, Mn, Fe, Mg, La, Ce, Sr, V, or combinations thereof; Q may be Ti, Mo, Mn, or combinations thereof; Z may be Cr, V, Fe, Sc, Y, or combinations thereof; J may be V, Cr, Mn, Co, Ni, Cu, or combinations thereof; $L^1$ may be Mn, Al, or combinations thereof.

The compounds may have a coating layer on the surface, or may be mixed with another compound having a coating layer. The coating layer may include a coating element compound, e.g., an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include, e.g., Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and, e.g., the method may include any coating method such as spray coating, dipping, or the like.

In the positive electrode, a content of the positive electrode active material may be, e.g., about 90 wt% to about 98 wt%, based on the total weight of the positive electrode active material layer.

In an implementation, the positive electrode active material layer may further include a binder and a conductive material. ;

The binder may help improve binding properties of positive electrode active material particles with one another and with a current collector. Examples of the binder may include polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, an acrylated styrene butadiene rubber, an epoxy resin, nylon, and the like.

The conductive material may provide electrode conductivity, and suitable electrically conductive material may be used as a conductive material unless it causes a chemical change. Examples of the conductive material may include a carbon material such as natural graphite, artificial graphite, carbon black, acetylene black, ketjen black, a carbon fiber and the like; a metal material of a metal powder or a metal fiber including copper, nickel, aluminium, silver, and the like; a conductive polymer such as a polyphenylene derivative; or a mixture thereof. The current collector may include, e.g., Al.

The electrolyte may include a non-aqueous organic solvent and a lithium salt. The non-aqueous organic solvent may serve as a medium for transmitting ions taking part in the electrochemical reaction of a battery. The non-aqueous organic solvent may include, e.g., a carbonate, ester, ether, ketone, alcohol, or aprotic solvent.

The carbonate solvent may include, e.g., dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like, the ester solvent may include methyl acetate, ethyl acetate, n-propyl acetate, dimethyl acetate, methyl propionate, ethyl propionate, propyl propionate, γ-butylolactone, decanolide, valerolactone, mevalonolactone, caprolactone, or the like. The ether solvent may include dibutyl ether, tetraglyme, diglyme, dimethoxyethane, 2-methyltetrahydrofuran, 2,5-dimethyltetrahydrofuran, tetrahydrofuran, or the like, and the ketone solvent may include cyclohexanone, or the like. The alcohol solvent may include ethyl

alcohol, isopropyl alcohol, or the like, and examples of the aprotic solvent may include nitriles such as R-CN (where R may be a C2 to C20 linear, branched, or cyclic hydrocarbon, and may include a double bond, an aromatic ring, or an ether bond), amides such as dimethylformamide, dioxolanes such as 1,3-dioxolane, 1,4-dioxolane, sulfolanes, or the like.

The non-aqueous organic solvent may be used alone or in a mixture. In an implementation, the non-aqueous organic solvent may be used in a mixture, and the mixture ratio may be controlled in accordance with a desirable battery performance.

In an implementation the non-aqueous organic solvent may be mixed and used, and a mixed solvent of a cyclic carbonate and a chain carbonate, a mixed solvent of a cyclic carbonate and a propionate solvent, or a mixed solvent of a cyclic carbonate, a chain carbonate, and a propionate solvent may be used. The propionate solvent may be, e.g., methyl propionate, ethyl propionate, propyl propionate, or a combination thereof.

In an implementation the cyclic carbonate and the chain carbonate or the cyclic carbonate and the propionate solvent may be mixed, e.g., in a volume ratio of about 1:1 to about 1:9 and thus performance of an electrolyte solution may be improved. In an implementation the cyclic carbonate, the chain carbonate, and the propionate solvent may be mixed in a volume ratio of, e.g., about 1:1:1 to about 3:3:4. The mixing ratios of the solvents may be appropriately adjusted according to desirable properties.

In an implementation, the non-aqueous organic solvent may further include an aromatic hydrocarbon solvent as well as the carbonate solvent. The carbonate solvent and aromatic hydrocarbon solvent may be mixed together in a volume ratio of, e.g., about 1:1 to about 30:1.

The aromatic hydrocarbon organic solvent may be an aromatic hydrocarbon compound represented by Chemical Formula 1.

[Chemical Formula 1]

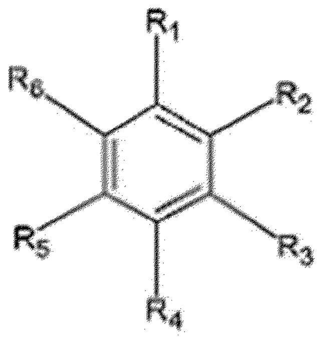

In Chemical Formula 1, $R_1$ to $R_6$ may each independently be or include, e.g., hydrogen, a halogen, a C1 to C10 alkyl group, a haloalkyl group (e.g. a C1 to C10 haloalkyl group), or a combination thereof.

In an implementation, the aromatic hydrocarbon organic solvent may include, e.g., benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

In an implementation, electrolyte may further include vinylethylene carbonate, vinylene carbonate, or an ethylene carbonate compound represented by Chemical Formula 2 as an additive for improving cycle life.

[Chemical Formula 2]

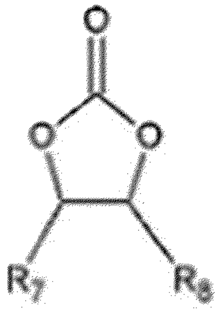

In Chemical Formula 2, $R_7$ and $R_8$ may each independently be or include, e.g., hydrogen, a halogen, a cyano group (CN), a nitro group ($NO_2$), or a C1 to C5 fluoroalkyl group, provided that at least one of $R_7$ and $R_8$ is a halogen, a cyano group (CN), a nitro group ($NO_2$), or a C1 to C5 fluoroalkyl group, and $R_7$ and $R_8$ are not simultaneously hydrogen.

In an implementation, the ethylene carbonate compound may be or include, e.g., difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. An amount of the additive for improving the cycle-life characteristics may be used within a suitable range.

The lithium salt dissolved in an organic solvent may supply a battery with lithium ions, may basically operate the rechargeable lithium battery, and may help improve transportation of the lithium ions between a positive electrode and a negative electrode. Examples of the lithium salt may include, e.g., $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide (LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$, wherein x and y are natural numbers, e.g., an integer of about 1 to about 20, lithium difluoro(bisoxalato) phosphate, LiCl, LiI, $LiB(C_2O_4)_2$ (lithium bis(oxalato)borate: LiBOB), or lithium difluoro(oxalato)borate (LiDFOB). A concentration of the lithium salt may range from about 0.1 M to about 2.0 M. Maintaining the concentration of the lithium salt within the above range may help ensure that an electrolyte may have excellent performance and lithium ion mobility due to optimal electrolyte conductivity and viscosity.

A separator may be between the positive electrode and the negative electrode depending on a type of a rechargeable lithium battery. The separator may include polyethylene, polypropylene, polyvinylidene fluoride or multilayers thereof having two or more layers and may be a mixed multilayer such as a polyethylene/polypropylene double-layered separator, a polyethylene/polypropylene/polyethylene triple-layered separator, a polypropylene/polyethylene/-polypropylene triple-layered separator, or the like.

FIG. 1 is an exploded perspective view of a rechargeable lithium battery according to an embodiment. In an implementation, as illustrated in the drawing figure, the rechargeable lithium battery may be a prismatic battery or may include variously-shaped batteries such as a cylindrical battery, a pouch battery, or the like.

As illustrated in FIG. 1, a rechargeable lithium battery 100 according to an embodiment may include an electrode assembly 40 manufactured by winding a separator 30 between a positive electrode 10 and a negative electrode 20 and a case 50 housing the electrode assembly 40. An electrolyte (not shown) may be impregnated in the positive electrode 10, the negative electrode 20 and the separator 30.

The following Examples and Comparative Examples are provided in order to highlight characteristics of one or more embodiments, but it will be understood that the Examples and Comparative Examples are not to be construed as limiting the scope of the embodiments. Further, it will be understood that the embodiments are not limited to the particular details described in the Examples and Comparative Examples.

(Example 1)

Silicon particles with an average particle diameter of 8 μm were ball-milled to prepare primary particles with an average particle diameter D50 of 100 nm. The primary particles and stearic acid were mixed at a weight ratio of 20: 80 and the mixture was spraydried to prepare secondary particles having an average particle diameter D50 of 7 μm and pores.

The prepared secondary particles and petroleum pitch were mixed at a weight ratio of 60:40 and the mixture was subjected to a compression molding by a cold isostatic pressing under a pressure of 10 Mpa. Thereafter, the obtained compression molding product was carbonized at 1,000 °C under an $N_2$ atmosphere.

The carbonized product was pulverized using a sieve in order to have span defined by Equation 2 to be 1.1 to prepare a negative electrode active material which was a silicon-carbon composite including the secondary particles with an average particle diameter D50 of 7 μm where the silicon primary particles coated with soft carbon at a thickness of 30 nm and having the average particle diameter (D50) of 100 nm, were agglomerated, and a soft carbon coating layer coated on the secondary particles. An amount of the silicon nanoparticles was 60 wt% based on the total weight of the negative electrode active material and the amount of the soft carbon was 40 wt%. D10, D50, and D90 of the negative electrode

active materials of Examples 1 to 4 and Comparative Examples 1 to 4 were measured using a particle size analyzer (Product name: LS 13 320, Manufacturer: Beckman Coulter). The results are shown in Table 1. From these values, span defined by Equation 2 was obtained, and was found to be 1.1.

[Equation 2]

$$\text{Span} = (D90 - D10)/D50$$

The sphericity was measured from the cross-sectional image obtained from a CP-SEM via an Image J program and found to be 0.98. A total pore volume and mesopore volume of the prepared negative electrode active material were measured using a BJH (Barrett-Joyner-Halenda) analysis apparatus.

The BJH measurement was performed using a BJH (model: ASAP 2020, manufacturer: Micromeritics) analysis apparatus to measure the amount of adsorption/desorption on the sample according to pressure changes, while the pressure was changed from 0 mmHg to 950 mmHg using nitrogen gas at a temperature of liquid nitrogen (-198 °C).

The total pore volume results are shown in Table 1 as BJH, and a ratio of the mesopore volume relative to the total pore volume ((mesopore volume/total pore volume)* 100) was calculated. The results are shown in Table 1.

The prepared negative electrode active material was used as a first negative electrode active material, and 97.5 wt% of a mixed negative electrode active material of the first negative electrode active material and a natural graphite second negative electrode active material (a mixing ratio of the first and the second negative electrode active material was a 90:10 weight ratio), 1.5 wt% of carboxymethyl cellulose, and 1 wt% of a styrene butadiene rubber were mixed in a water solvent to prepare a negative electrode active material layer slurry.

The negative electrode active material layer slurry was coated on Cu foil current collector, dried, and pressurized to prepare a negative electrode active material layer, thereby preparing a negative electrode.

The negative electrode, a lithium metal counter electrode, and an electrolyte were used to fabricate a half-cell by the general procedure. The electrolyte was a 1 M $LiPF_6$ solution in a mixed solvent of ethylene carbonate and dimethyl carbonate (3:7 volume ratio).

A positive electrode active material layer slurry prepared by mixing 96 wt% of a $LiNi_{0.88}Co_{0.11}Al_{0.01}O_2$ positive electrode active material, 2 wt% of a polyvinylidene fluoride binder, and 2 wt% of a Ketjen black conductive material in an N-methyl pyrrolidone solvent, was coated on an Al foil current collector, dried, and then pressurized to prepare a positive electrode.

The negative electrode, the positive electrode, and an electrolyte were used to fabricate a coin-type full cell and a pouch-type full cell by the general procedure. The electrolyte was a 1 M $LiPF_6$ solution in a mixed solvent of ethylene carbonate and dimethyl carbonate (3:7 volume ratio).

(Example 2)

A negative electrode, a half-cell, a coin-type full cell, and a pouch-type full cell were fabricated by the same procedure as in Example 1, except that the mixture of the prepared secondary particles and the petroleum pitch was subjected to a compression molding by a cold isostatic pressing under a pressure of 30 Mpa and the pulverization was carried out in order to have span of 1.5 to prepare a negative electrode active material having span of 1.5 and a sphericity of 0.95.

(Example 3)

A negative electrode, a half-cell, a coin-type full cell, and a pouch-type full cell were fabricated by the same procedure as in Example 1, except that the mixture of the prepared secondary particles and the petroleum pitch was subjected to a compression molding by a cold isostatic pressing under a pressure of 20 Mpa and the pulverization was carried out in order to have span of 1.3 to prepare a negative electrode active material having span of 1.3 and a sphericity of 0.96.

(Example 4)

In distilled water, 6 wt% of polyvinyl alcohol and 94 wt% of polyacrylic acid were mixed to prepare a polymer solution. A mole ratio of the OH group included in polyvinyl alcohol and the COOH group included in polyacrylic acid was 10:90.

The silicon-carbon composite prepared in Example 1 was mixed with the polymer solution, shaken, and then dried. A mixing ratio of the silicon-carbon composite and the polymer solution was adjusted in order to have the silicon-carbon composite to be 97.1 wt% and the polymer to be 2.9 wt%. The dried mixture was heat-treated at 150 °C to prepare a

negative electrode active material. In the prepared negative electrode active material, an amount of the polymer was, based on 100 parts by weight of the silicon-carbon composite, approximately 3 parts by weight, a mixing ratio of polyvinyl alcohol and polyacrylic acid was a weight ratio of 6:94, and a mole ratio of the OH group included in polyvinyl alcohol and the COOH group included in polyacrylic acid was 10:90. The prepared negative electrode active material had span of 1.1 and sphericity of 0.97.

The prepared negative electrode active material was used as a first negative electrode active material, and 97.5 wt% of a mixed negative electrode active material of the first negative electrode active material and a natural graphite second negative electrode active material (a mixing ratio of the first and the second negative electrode active material was a 90:10 weight ratio) was used to fabricate a negative electrode, a half-cell, a coin-type full cell, and a pouch-type full cell by the same procedure as in Example 1.

(Example 5)

In distilled water, 6 wt% of polyvinyl alcohol and 94 wt% of polyacrylic acid were mixed to prepare a polymer solution. A mole ratio of the OH group included in polyvinyl alcohol and the COOH group included in polyacrylic acid was 10:90.

The silicon-carbon composite prepared in Example 2 was mixed with the polymer solution, shaken, and then dried. A mixing ratio of the silicon-carbon composite and the polymer solution was adjusted in order to have the silicon-carbon composite to be 97.1 wt% and the polymer to be 2.9 wt%. The dried mixture was heat-treated at 150 °C to prepare a negative electrode active material. In the prepared negative electrode active material, an amount of the polymer was, based on 100 parts by weight of the silicon-carbon composite, approximately 3 parts by weight, a mixing ratio of polyvinyl alcohol and polyacrylic acid was a weight ratio of 6:94, and a mole ratio of the OH group included in polyvinyl alcohol and the COOH group included in polyacrylic acid was 10:90. The prepared negative electrode active material had a span of 1.5 and a sphericity of 0.95.

The prepared negative electrode active material was used as a first negative electrode active material, and 97.5 wt% of a mixed negative electrode active material of the first negative electrode active material and a natural graphite second negative electrode active material (a mixing ratio of the first and the second negative electrode active material was a 90:10 weight ratio) was used to fabricate a negative electrode, a half-cell, a coin-type full cell, and a pouch-type full cell by the same procedure as in Example 1.

(Comparative Example 1)

A negative electrode, a half-cell, a coin-type full cell, and a pouch-type full cell were fabricated by the same procedure as in Example 1, except that a compression molding for the mixture of the prepared secondary particles and petroleum pitch was not performed and the pulverization was carried out in order to have a span of 1.0 to prepare a negative electrode active material having a span of 1.0 and a sphericity of 0.97.

(Comparative Example 2)

A negative electrode, a half-cell, a coin-type full cell, and a pouch-type full cell were fabricated by the same procedure as in Example 1, except that the mixture of the prepared secondary particles and the petroleum pitch was subjected to a compression molding by a cold isostatic pressing under a pressure of 35 Mpa and the pulverization was carried out in order to have span of 1.7 to prepare a negative electrode active material having span of 1.7 and a sphericity of 0.96.

(Comparative Example 3)

A negative electrode, a half-cell, a coin-type full cell, and a pouch-type full cell were fabricated by the same procedure as in Example 1, except that the mixture of the prepared secondary particles and the petroleum pitch was subjected to a compression molding by a cold isostatic pressing under a pressure of 150 Mpa to prepare a negative electrode active material having span of 1.1 and a sphericity of 0.85, indicating non-spherical.

(Comparative Example 4)

A negative electrode, a half-cell, a coin-type full cell, and a pouch-type full cell were fabricated by the same procedure as in Example 2, except that the mixture of the prepared secondary particles and the petroleum pitch was subjected to a compression molding by a cold isostatic pressing under a pressure of 150 Mpa to prepare a negative electrode active material having span of 1.5 and a sphericity of 0.85, indicating non-spherical.

Experimental Example 1: Evaluation of charge and discharge efficiency

The half-cells according to Examples 1 to 5 and Comparative Examples 1 to 4 were once charged and discharged at 0.1C within the range of 0.01 V to 1.5 V, and a ratio of the measured discharge capacity relative to the measured charge capacity was calculated. The results are shown in Table 2, as efficiency.

Experimental Example 2) Evaluation of cycle-life characteristic

The coin-type full cells according to Examples 1 to 5 and Comparative Examples 1 to 4 were charged and discharged at 0.1C once, at 0.2C once, and at 1C for 500 cycles within the range of 2.5 V to 4.2 V. Charge and discharge procedure and cut-off condition were as below.

Charge: constant current-constant voltage, 4.2V/0.01C cut-off
Discharge: constant voltage, 2.5V cut-off
A ratio of the discharge capacity at 500$^{th}$ cycle relative to the discharge capacity at 1$^{st}$ cycle was calculated. The results are shown in Table 2.

Experimental Example 3) Evaluation of expansion characteristic

The pouch-type full cells according to Examples 1 to 5 and Comparative Examples 1 to 4 were subjected to a formation charge and discharge at 0.1C once and charged and discharged at 1C for 25 cycles. A ratio of the battery thickness after charging and discharging for 25 cycles relative to the battery thickness after the formation charge and discharge was calculated. The results are shown in Table 2, as expansion (%).

Charge: constant current-constant voltage, 4.2V/0.01C cut-off
Discharge: constant voltage, 2.5V cut-off

Table 1

| | Sphericity | Mesopore volume/total pore volume (%) | Specific surface area ($m^3/g$) | BJH ($cm^3/g$) | D10 ($\mu m$) | D50 ($\mu m$) | D90 ($\mu m$) | Span |
|---|---|---|---|---|---|---|---|---|
| Example 1 | 0.98 | 68% | 0.8 | 0.007 | 4.7 | 8.2 | 13.7 | 1.1 |
| Example 2 | 0.95 | 32% | 1.9 | 0.020 | 3.9 | 8.5 | 16.9 | 1.5 |
| Example 3 | 0.96 | 56% | 1.4 | 0.010 | 4.1 | 7.8 | 14.1 | 1.3 |
| Example 4 | 0.97 | 65% | 0.5 | 0.005 | 5.2 | 8.7 | 14.9 | 1.1 |
| Example 5 | 0.95 | 30% | 1.2 | 0.015 | 4.1 | 7.9 | 159 | 1.5 |
| Comparative Example 1 | 0.97 | 70% | 2 | 0.010 | 5.4 | 8.4 | 14.1 | 1.0 |
| Comparative Example 2 | 0.96 | 25% | 2.1 | 0.008 | 2.4 | 7.6 | 15.4 | 1.7 |
| Comparative Example 3 | 0.85 | 19% | 2.4 | 0.001 | 4.9 | 8.5 | 142 | 1.1 |
| Comparative Example 4 | 0.85 | 20% | 2.6 | 0.001 | 3.8 | 8.5 | 16.5 | 1.5 |

Table 2

| | Efficiency (%) | Cycle-life (%) | Expansion (%) |
|---|---|---|---|
| Example 1 | 90.6 | 90.5 | 14 |
| Example 2 | 90.1 | 90 | 16 |
| Example 3 | 90 | 902 | 15 |
| Example 4 | 89.9 | 91.5 | 14 |
| Example 5 | 89.8 | 91 | 16 |

(continued)

| | Efficiency (%) | Cycle-life (%) | Expansion (%) |
|---|---|---|---|
| Comparative Example 1 | 88.5 | 88 | 23 |
| Comparative Example 2 | 88.9 | 85.6 | 25 |
| Comparative Example 3 | 88 | 55.4 | 32 |
| Comparative Example 4 | 88.1 | 51.8 | 35 |

As shown in Tables 1 and 2, Examples 1 to 5 included a negative electrode active material in which the ratio of the mesopore volume relative to the total pore volume was 30% or more and less than 70%, had a spherical shape, exhibited excellent efficiency, high cycle-life, and low expansion characteristic.

Whereas, Comparative Examples 1 and 2 included a negative electrode active material with a mesopore volume of 70% or 25% and exhibited deteriorated cycle-life and high expansion characteristic.

Comparative Examples 3 and 4 included a negative electrode active material having a non-spherical shape and exhibited deteriorated efficiency, extremely low cycle-life characteristic, and surprisingly high expansion characteristic.

By way of summation and review, some embodiments provide a negative electrode active material exhibiting improved expansion characteristic and excellent cycle-life characteristic. Another embodiment may provide a rechargeable lithium battery including the negative electrode active material.

Example embodiments have been disclosed herein, and although specific terms are employed, they are used and are to be interpreted in a generic and descriptive sense only and not for purpose of limitation. In some instances, as would be apparent to one of ordinary skill in the art as of the filing date of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

**1.** A negative electrode active material, comprising:

silicon nanoparticles comprising an amorphous carbon coating layer on a surface of the silicon nanoparticles; and pores,
wherein:

the negative electrode active material has a sphericity as represented by Equation 1 of about 0.9 to about 1.0, the pores comprise mesopores, and a ratio of a mesopores volume relative to a total pore volume of the negative electrode active material is about 30% or more and less than about 70%, and

[Equation 1]

$$\text{Sphericity (S)} = 4\pi \times A/B^2$$

in Equation 1, A is an area of the negative electrode active material and B is a circumference of a shape of the negative electrode active material.

**2.** The negative electrode active material as claimed in claim 1, wherein the mesopores have a size of about 2 nm to about 50 nm.

**3.** The negative electrode active material as claimed in claim 1 or claim 2, wherein the ratio of the mesopore volume relative to the total pore volume of the negative electrode active material is about 30% to about 68%.

**4.** The negative electrode active material as claimed in any one of claims 1 to 3, wherein:

the negative electrode active material has a span as defined by Equation 2 of about 1.1 to about 1.6, and

[Equation 2]

$$Span= (D90-D10)/D50$$

in Equation 2, D10 refers to a diameter of the negative electrode active material particles with a cumulative volume of 10 volume% in a particle size distribution, D50 refers to a diameter of the negative electrode active material particles with a cumulative volume of 50 volume% in the particle size distribution, and D90 refers to a diameter of the negative electrode active material particles with a cumulative volume of 90 volume% in the particle size distribution.

**5.** The negative electrode active material as claimed in claim 4, wherein:

(i) the span of the negative electrode active material is about 1.1 to about 1.55; or
(ii) the span of the negative electrode active material is about 1.1 to about 1.5.

**6.** The negative electrode active material as claimed in any one of claims 1 to 5, wherein:

(i) the sphericity of the negative electrode active material is about 0.92 to about 0.98; or
(ii) the sphericity of the negative electrode active material is about 0.92 to about 0.95.

**7.** The negative electrode active material as claimed in any one of claims 1 to 6, wherein the negative electrode active material further comprises a polymer layer on the amorphous carbon coating layer.

**8.** The negative electrode active material as claimed in claim 7, wherein:

(i) the polymer layer comprises polyvinyl alcohol and polyacrylic acid; or
(ii) the polymer layer comprises a copolymer of polyvinyl alcohol and polyacrylic acid, optionally wherein the copolymer comprises a cross-linked copolymer in which the polyvinyl alcohol and the polyacrylic acid are cross-linked.

**9.** The negative electrode active material as claimed in any one of claims 1 to 8, wherein:

(i) the negative electrode active material has a specific surface area (BET) of about 0.5 $m^2/g$ to about 2 $m^2/g$; or
(ii) the negative electrode active material has a specific surface area (BET) of about 0.8 $m^2/g$ to about 2 $m^2/g$.

**10.** The negative electrode active material as claimed in any one of claims 1 to 8, wherein the negative electrode active material has a specific surface area (BET) of about 0.8 $m^2/g$ to about 1.5 $m^2/g$.

**11.** The negative electrode active material as claimed in any one of claims 1 to 10, wherein the total pore volume of the negative electrode active material is about 0.001 $cm^3/g$ to about 0.05 $cm^3/g$.

**12.** The negative electrode active material as claimed in any one of claims 1 to 11, wherein the silicon nanoparticles have a particle diameter of about 1 nm to about 1,000 nm.

**13.** The negative electrode active material as claimed in any one of claims 1 to 12, wherein the amorphous carbon coating layer has a thickness of about 1 nm to about 2 $\mu$m.

**14.** A rechargeable lithium battery, comprising:

a negative electrode comprising the negative electrode active material of any one of claims 1 to 13;
a positive electrode; and
an electrolyte.

**15.** The rechargeable lithium battery as claimed in claim 14, wherein the negative electrode comprises the negative electrode active material as a first negative electrode active material and further comprises crystalline carbon as a second negative electrode active material.

FIG. 1

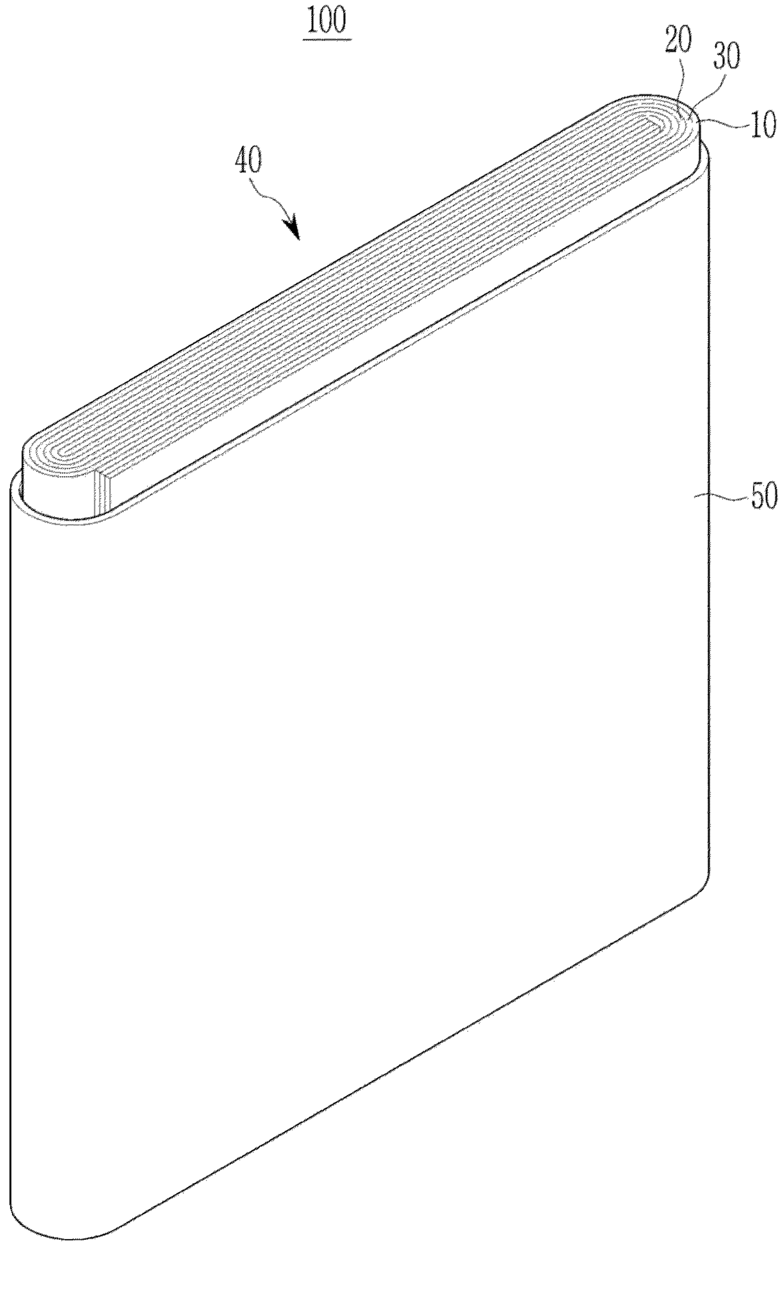

Europäisches Patentamt
European Patent Office
Office européen des brevets

# EUROPEAN SEARCH REPORT

Application Number
EP 24 19 5221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2024/219617 A1 (SAMSUNG SDI CO LTD [KR]) 24 October 2024 (2024-10-24) * [9];[243-73] * ----- | 1-15 | INV. H01M4/134 H01M4/1395 H01M4/38 ADD. H01M4/62 |
| X | JIANPING YANG ET AL: "Yolk-shell silicon-mesoporous carbon anode with compact solid electrolyte interphase film for superior lithium-ion batteries", NANO ENERGY, vol. 18, 24 October 2015 (2015-10-24), pages 133-142, XP055607471, NL ISSN: 2211-2855, DOI: 10.1016/j.nanoen.2015.09.016 * title; abstract; figs. 1, 4 * ----- | 1 | |
| T | RAOOF BARDESTANI ET AL: "Experimental methods in chemical engineering: specific surface area and pore size distribution measurements - BET, BJH and DFT", CANADIAN JOURNAL OF CHEMICAL ENGINEERING, WILEY SUBSCRIPTION SERVICES, INC., A WILEY COMPANY, HOBOKEN, USA , vol. 97, no. 11 1 November 2019 (2019-11-01), pages 2781-2791, XP009538098, ISSN: 0008-4034, DOI: 10.1002/CJCE.23632 Retrieved from the Internet: URL:https://onlinelibrary.wiley.com/doi/epdf/10.1002/cjce.23632 [retrieved on 2019-09-25] * the whole document * ----- | | TECHNICAL FIELDS SEARCHED (IPC) H01M |

2

The present search report has been drawn up for all claims

| Place of search | Date of completion of the search | Examiner |
|---|---|---|
| Munich | 24 January 2025 | Radeck, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 19 5221

This annex lists the patent family members relating to the patent documents cited in the above-mentioned European search report. The members are as contained in the European Patent Office EDP file on
The European Patent Office is in no way liable for these particulars which are merely given for the purpose of information.

24-01-2025

| Patent document cited in search report | Publication date | Patent family member(s) | Publication date |
| --- | --- | --- | --- |
| WO 2024219617 A1 | 24-10-2024 | NONE | |

EPO FORM P0459

For more details about this annex : see Official Journal of the European Patent Office, No. 12/82